# EUROPEAN PATENT SPECIFICATION

(11) **EP 4 365 494 B1**
(45) Date of publication and mention of the grant of the patent: **20.05.2026**
(21) Application number: 22205568.3
(22) Date of filing: 04.11.2022
(51) Int. Cl.: F24C 15/30, F24C 15/20, A47J 37/06, F24C 15/10, F24C 15/14, F24C 15/18

(54) **KITCHEN EXTRACTOR HOOD AND COOKING SYSTEM**
KÜCHENABZUGSHAUBE UND KOCHSYSTEM
HOTTE ASPIRANTE DE CUISINE ET SYSTÈME DE CUISSON

(43) Date of publication of application: 08.05.2024
(73) Proprietor: Faber S.p.A., 60044 Fabriano (Ancona) (IT)
(72) Inventor: Gasparini, Alberto, 60044 Fabriano (IT)
(74) Representative: LBP Lemcke, Brommer & Partner Patentanwälte mbB

(56) References cited:
- EP-A1- 0 045 289
- CN-A- 114 001 391
- CN-U- 214 198 795
- DE-A1- 102008 027 470
- DE-U1- 7 736 750
- FR-A1- 3 036 170
- JP-A- 2008 128 579
- JP-U- S6 395 010
- US-A- 3 598 962
- US-A- 5 690 848

## Description

The invention relates to an extractor hood according to the preamble of claim 1 and to a cooking system according to claim 11, which cooking system comprises a cooking hob in addition to the extractor hood.

Nowadays, kitchens are regularly equipped with cooking hobs (operated with electricity and/or gas), which cooking hobs are often integrated into a kitchen worktop. An extractor hood is regularly arranged above such cooking hobs in order to extract vapours or smoke produced during cooking or frying. This exhaust air can then be transported to the outside or filtered and then returned to the kitchen.

In order to be able to prepare additional types of food and dishes, there is often a need for an additional cooking device in the kitchen, which can be designed either as a barbecue grill and/or as a plancha, hotstone or the like, as required. However, such cooking devices are not needed all the time, but only occasionally, so that there is a corresponding need for such cooking devices that are not present all the time, so that they do not take up unnecessary space or get dirty.

Cooking devices are already known from the prior art that can be swivelled between a folded-out operating position and a folded-in storage position. Furthermore, such additional cooking devices often produce an increased level of fumes, especially smoke, during operation, especially when said cooking devices are a devised in the form of a barbecue grill.

US 5,690,848 A discloses a suction hood with an integrated grill according to the preramble of claim 1.

DE 10 2008 027 470 A1 discloses an extractor hood that can be moved up and down in the vertical direction.

JP 2008 128579 A also discloses an extractor hood that can be moved up and down in the vertical direction.

FR 3 036 170 A1 discloses a cooking device of the "plancha" type that includes a device for the evacuation of vapours and fumes.

EP 0 045 289 A1 shows a kitchen extractor hood for integration in a cupboard, wherein a grill is fixed to the cupboard below said extractor hood and acts as a baffle for to create additional horizontal air flow.

JP S63 95010 U discloses a cooktop with integrated extractor means having air intake openings that are located at a backside of the cooktop. The extractor means comprise fans that are located below the cooktop.

DE 77 36 750 U1 discloses a mobile suction hood that can be placed on a table and above a cooking or grilling device.

There is therefore an additional need for such an additional cooking device, the exhaust air from which can be extracted and removed as efficiently as possible.

The invention is therefore based on the task of further developing an extractor hood of the type mentioned above in such a way that the exhaust air produced when using the cooking device, in particular vapours and/or smoke, can be extracted and removed as efficiently as possible, while providing an improved cooling effect on said cooking device.

This object is achieved in a kitchen extractor hood according to the invention by the features of the appended patent claim 1.

Where a cooking system according to the invention is concerned, the said object is achieved by the features of the appended claim 11.

Advantageous further developments are defined in the respective subclaims.

According to the invention, a kitchen extractor hood comprises: a body for positioning at a wall of the kitchen, said body having an inlet portion and an outlet portion, a fan arranged in said body for sucking in cooking fumes and vapours, in particular from a cooking hob of the kitchen, above which cooking hob the extractor hood is to be positioned, via said inlet portion and for pushing said fumes and vapours through the outlet portion out of the extractor hood, the body of the extractor hood has a box-shaped portion extending beyond the inlet portion and preferably along said wall of the kitchen, said box-shaped portion supporting a retractable cooking device having heating means capable of assuming a first position below said inlet portion during use for the preparation of food by said heating means, in which first position the cooking device is folded out of said box-shaped portion, and a second position, in which second position said cooking device is folded back into said box-shaped portion when not in use. Said cooking device, when folded out, is placed at a distance between 25 and 35 cm from the inlet portion, preferably at a distance of about 30 cm. Said cooking device comprises a casing, in which casing at least said heating means are located. Furthermore, said body comprises at least one additional fan, which fan is arranged to take in air from outside the extractor hood and to push said air into said casing, said box-shaped portion has a recess for engaging with the cooking device in said second position and at least one lateral portion delimiting said recess, said lateral portion holding said additional fan. Said lateral portion has at least one air intake opening for supplying air to said additional fan and is fluidically connected to an interior of said casing.

According to another aspect of the invention, a cooking system comprises: a kitchen extractor hood according to the present invention and an additional cooking hob, wherein the extractor hood is placed above said cooking hob and wherein preferably the cooking device, in its first position, is located at a free distance from, i.e., above, said cooking hob, said free distance measuring between 10 and 30 cm, preferably 20 cm.

Normally, conventional extractor hoods are located at a distance of about 60 cm above a cooking hob (said hob being integrated in a kitchen worktop). Such a distance can be too great, in particular, when a lot of smoke is produced during the preparation of food, as is the case, for example, when frying or grilling. In this case, the conventional extractor hood is often not able to remove the existing exhaust air to a sufficient extent. Due to the fact that, according to the invention, the cooking device in the unfolded state is only about 30 cm below the inlet area or inlet portion of the actual extractor hood, this problem can be safely avoided.

This also applies to the cooking system according to the invention, because the fold-out cooking device does not rest on the additional cooking hob, but is located at a clear distance above it. It forms an additional cooking level, so to speak, which is arranged above the normal cooking level.

Both the cooking hob and the fold-out cooking device can, in principle, be used simultaneously. In particular, it may be possible to use two pans with a limited height of about 5 cm max on the (two) front hob heaters while the fold-out cooking device is in operation.

According to a further development of the extractor hood according to the invention, it is provided that said cooking device comprises a plancha, a hotstone and/or a barbecue grill, e.g., in the form of a cast iron cooking plate. Said plancha can take the form of a stainless-steel plate (teppan yaki). Said hotstone can take the form of a soapstone. Within the scope of the present invention, it is further possible to combine different cooking zones and different materials in one cooking device. Said cooking elements (plancha, hotstone, cast-iron plate, etc.) may be removable, e.g., for cleaning, and/or interchangeable.

Such cooking devices are often not present in a conventional kitchen. They are also characterised by an increased generation of steam or smoke and are therefore predestined for use within the scope of the present invention.

According to the invention, it is provided that said cooking device comprises a casing, in which casing at least said heating means are located, which casing preferably comprises a thermal insulation and/or is made - at least in part - from a thermally insulating material, e.g., ceramic fibre.

Such an enclosure or casing helps to prevent the cooking device from becoming too hot on the outside in order to protect a user during use.

Said heating means can be devised in a number of alternative ways. For instance, alternatives to the usual tubular heating elements indicated as a main solution for the barbecue can include infrared or halogen heating elements under glass-ceramic (same solution as preferably assumed for any upper additional heater inserted in the perimetral panel of the hood, cf. further embodiment described further down).

According to a further development of the extractor hood according to the invention, it is provided that said casing, i.e., an interior thereof, is in fluidic connection with said inlet portion.

Such a fluid connection enables active cooling of the cooking device by utilising a fan already present in the extractor hood, which is synergistically particularly efficient and cost-effective.

According to a further development of the extractor hood not part of the invention, it is provided that said fluidic connection is provided by and passes through said box-shaped portion.

In this way, the mechanical structure in the extractor hood can be used for said cooling in a particularly favourable and space-saving manner.

According to a further development of the extractor hood not part of the invention, it is provided that an interior of said casing is fluidically connected with said inlet portion in an area below said heating means.

In this way, effective cooling of the cooking device can be provided without adversely affecting a heating effect of said heating means.

According to a further development of the extractor hood according to the invention, it is provided that said casing has at least one air intake opening, preferably in a portion below said heating means.

Fresh air can be introduced into the cooking device from the outside through said opening in order to make the intended cooling effect as efficient as possible. According to the invention, it is provided that said body comprises at least one additional fan, which fan is arranged to take in air from outside the extractor hood and to push said air into said casing, preferably in an area below said heating means.

Such an embodiment offers a cooling possibility for the cooking device, which does not use an existing fan of the extractor hood, but an additional fan, which can offer the advantage that the cooling effect can also be ensured or controlled independently of a further function of the extractor hood.

According to a further development of the extractor hood according to the invention, it is provided that said casing has at least one air outlet opening, preferably in a portion below said heating means, more preferably on a front side facing away from said body in said first position and/or on a lateral side thereof.

In this case, the air flow can be just the opposite of the above-mentioned embodiment: whereas in the above-mentioned embodiment air was drawn into the housing from the outside, air provided by the additional fan can now be expelled from the housing. It is, however, also possible to draw outside cooling air into the casing by means of said additional fan.

According to the invention, it is provided that said box-shaped portion has a recess for engaging with the cooking device in said second or storage position and at least one lateral portion delimiting said recess. Said lateral portion houses said additional fan mentioned above.

Such a recess allows the cooking device to be stowed in the folded position, which may be advantageous not only from an aesthetic point of view. The at least one lateral area delimiting the recess can be used to accommodate the additional fan in a space-saving manner.

According to the invention, it is provided that said lateral portion has at least one air intake opening for supplying air the said additional fan and is fluidically connected to an interior of said casing. Said air intake opening may be directed toward said recess so that it is covered and protected when the cooking device is folded in.

The lateral region may thus have a further function of guiding air to the additional fan and further towards the casing of the cooking device.

According to a further development of the extractor hood according to the invention, it is provided that a grease collecting channel is arranged around said plancha or barbecue grill, said grease collecting channel preferably being slanted, at least at the lateral sides of the cooking device, toward a front side of the cooking device, said front side facing away from said body (or the kitchen wall) in said first position. Said grease collecting channel can also be slanted at said front side toward a corner (or the centre) of said front side in order to guide the grease toward said corner (or centre). Said grease collecting channel more preferably further has at least one fluid connection with an outside of the extractor hood for evacuation of grease.

Because, in particular during grilling or frying, larger quantities of fat or grease are produced, such a design is particularly advantageous because it helps to keep the actual cooking device clean, which can be further supported by the aforementioned slanted design.

Through the said optional fluid connection with an environment of the extractor hood, the removal of even larger quantities of grease can be ensured without these remaining in the cooking device and permanently soiling it or making costly cleaning necessary.

According to a further development of the extractor hood according to the invention, it is provided that said fluid connection is located at a front side of the cooking device in said first position, preferably in a central position or at a corner.

Corresponding tests of the applicant have shown that such an arrangement is particularly favourable in operation.

In another highly preferred embodiment, the extractor hood according to the present invention further comprises at least one temperature sensor, preferably infrared temperature sensor, more preferably integrated in an area of said inlet portion, said temperature sensor being in operative connection with said cooking device, in particular with a temperature control unit and/or with a temperature display of said cooking device for controlling and/or displaying, respectively, a cooking temperature.

Such an embodiment can further be used to generate respective cooking profiles for a plurality of recipes, using for example (meat) probes to be inserted in the foodstuff to be prepared in order to monitor a core temperature during cooking. Said probes can interact (communicate) with the cooking device to achieve a temperature control thereof.

More specifically, a wireless connection of said probes with a processor unit of the cooking device would allow the latter to manage different cooking profiles by way switching (on/off) of the heating elements via suitable control electronics. The core temperatures read by the probes could be displayed either directly on a display located on the probe or on a display located on the barbecue control area, i.e., a display on the cooking device.

In the case of infrared sensors, they can preferably provide a precise measurement of the surface temperature of the cooking plate, i.e., a cooking area of the the cooking device, and interact with the said electronics to manage operation of the heating elements thus ensuring that the temperature is set for different cooking depending on of the type of food to be cooked.

The latter two approaches preferably require (and comprise) an electronic temperature control excluding the use of electromechanical thermostats.

In another highly preferred embodiment, the extractor hood according to the present invention further comprises at least additional heating element, in particular infrared heating element under glass ceramic, in an area of said inlet portion, above and preferably parallel to said cooking device in its first position, to allow a simultaneous cooking from above as well as from below, which can significantly reduce cooking time.

A further development of the cooking system according to the invention provides a control unit devised to enable activation of the cooking device in said first position only and to allow activation of the cooking device and said additional cooking hob separately only, wherein preferably the control unit allows activation of the cooking device only in combination with activation of the extractor hood, i.e., said fan and/or in combination with said additional fan.

In a preferred embodiment, operation of the cooking device always provides for the activation of the fan of the hood at a speed adequate to ensure proper disposal of fumes. If present, any additional cooling fan should also always preferably be activated when using the cooking device in order to prevent overheating of touchable parts.

In this way it can be ensured that the cooking device and the additional cooking hob are not accidentally operated simultaneously, which could in particular lead to injuries to the user. Furthermore, it can be ensured in this way that the cooking device can only be operated when the actual extractor hood is in operation. This can be particularly advantageous if the extractor hood's fan also provides cooling for the cooking device. The corresponding applies if the extractor hood is equipped with an additional fan for cooling the cooking device. Correspondingly, both fans should then be in operation in order to be able to use the cooking device.

Further features and advantages of the invention will become apparent from the following description of embodiments with reference to the drawings.
Figure 1 shows a perspective view of an extractor hood according to the invention in the second position;
Figure 2 shows the extractor hood Figure 1 in the first position together with an additional cooking hob;
Figure 3 shows a perspective view of a further extractor hood according to the invention in the second position;
Figure 4 shows the extractor hood of Figure 3 in the first position together with an additional cooking hob;
Figure 5 shows an exploded view of the cooking device of an extractor hood according to the invention;
Figure 6 shows selected components of the cooking device according to Figure 5;
Figure 7 shows further selected components of the cooking device according to Figure 5;
Figure 8 relates to an embodiment that is not part of the present invention and shows a sectional view of the extractor hood according to Figure 4;
Figure 9 relates to an embodiment that is not part of the present invention and shows a detailed representation of the extractor hood according to Figure 8;
Figure 10 shows a design of components of an extractor hood according to the invention;
Figure 11 shows a detail of the design according to Figure 10;
Figure 12 shows a further detail of the design according to Figure 10, partly in section;
Figure 13 shows further details of the design according to Figure 10;
Figure 14 shows further details of an extractor hood according to the invention, partly in section;
Figure 15 shows a detail from Figure 14 in an enlarged representation.
Figure 16 shows further details of an extractor hood according to the invention, partly in section;
Figure 17 shows the extractor hood of Figure 16 in its folded position;
Figure 18 shows another embodiment of an extractor hood according to the invention:
Figure 19 shows the extractor hood of Figure 18 in its horizontal working position, cf. Figure 4;
Figure 20 shows another embodiment of an extractor hood according to the invention;
Figure 21 shows an alternative design of the embodiment in Figures 16 and 17;
Figure 22 shows a different view of the embodiment in Figure 21;
Figure 23 shows the combined use of the cooking device of the extractor hood and an additional cooking hob; and
Figure 24 shows another view of the embodiment in Figure 23.

In all the figures, the reference numerals are the same or at least have the same effect.

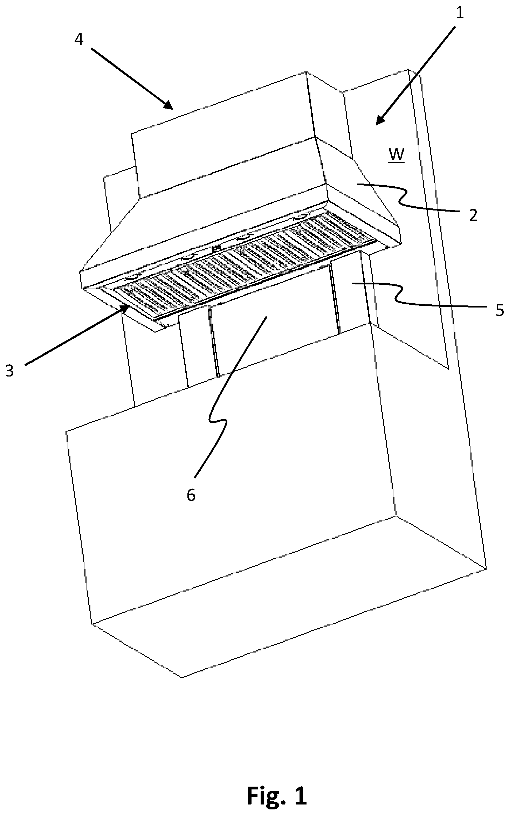

Figure 1 shows a first embodiment of the extractor hood according to the invention in a perspective view. The extractor hood is designated overall by the reference numeral 1. In the present case, it is designed as a so-called chimney hood. The extractor hood 1 comprises a body or a housing 2, which body 2 has an inlet portion 3 and an outlet portion 4. Through the inlet section 3, cooking fumes and vapours are drawn in from a cooking hob (not shown here) arranged below the extractor hood 1 and then discharged to the outside through the outlet section 4 via an exhaust chimney (not shown) or - after corresponding filtering - fed back into the ambient air.

A fan is arranged in the body or housing 2 for this purpose, which is familiar to those skilled in the art, but which fan cannot be seen in the illustration in Figure 1.

The body or housing 2 has a box-shaped portion 5 below the inlet section 3, which a box-shaped portion 5 can be integral with the rest of the body 2 and is preferably to be arranged along a (kitchen) wall W when the extractor hood 1 is installed. In this box-shaped portion 5, a foldable and unfoldable cooking device 6 is arranged, which cooking device 6 can in particular assume the folded-in or second position shown in Figure 1, while the unfolded position is also referred to as the first position in the following. This will be described in more detail below with reference to the further figures.

The further design of the actual extractor hood 1, i.e., the area between the inlet portion 3 and the outlet portion 4, does not need to be described in more detail below because this is not the subject of the present invention and because the skilled person is sufficiently familiar with it.

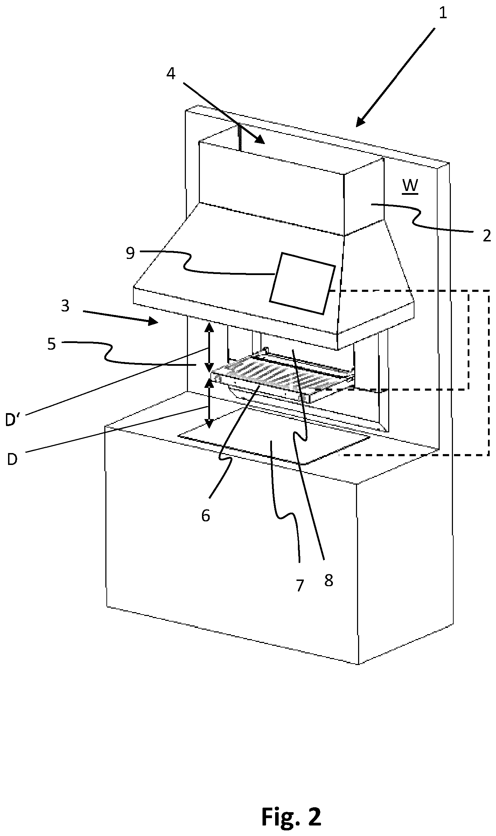

Figure 2 shows the extractor hood 1 of Figure 1 in a slightly different perspective view and with the cooking device 6 in the unfolded first position. In this first position, the cooking device 6 can be used to prepare food. In particular, the cooking device 6 is a barbecue grill, as shown, or a hotstone or a plancha. As can be seen from figure 2, in the unfolded position the cooking device is at a clear height, i.e., distance D, from an additional cooking hob 7, which cooking hob is conventionally installed in a (kitchen) worktop. Preferably, the said distance D is between 10 and 30 cm, while a distance D' between inlet portion 3 and cooking device 6 is about 25 to 35 cm, preferably about 30 cm.

The additional cooking hob 7 and the extractor hood 1 according to the invention together form a cooking system according to the invention, as defined in the appended claims.

As can further be seen from Figures 1 and 2, the box-shaped portion 5 surrounds the cooking device 6 at least in the folded second position or forms a recessed receptacle 8 for the cooking device 6, as can be seen well in particular in Figure 2.

Preferably, the extractor hood 1 comprises a control unit 9, shown only schematically in Figure 2, which is designed and set up so that, on the one hand, the cooking hob 7 and the cooking device 6 can only be operated separately from one another and, on the other hand, ensures that the cooking device 6 in particular can only be operated if the said fan of the extractor hood 1 is active at the same time.

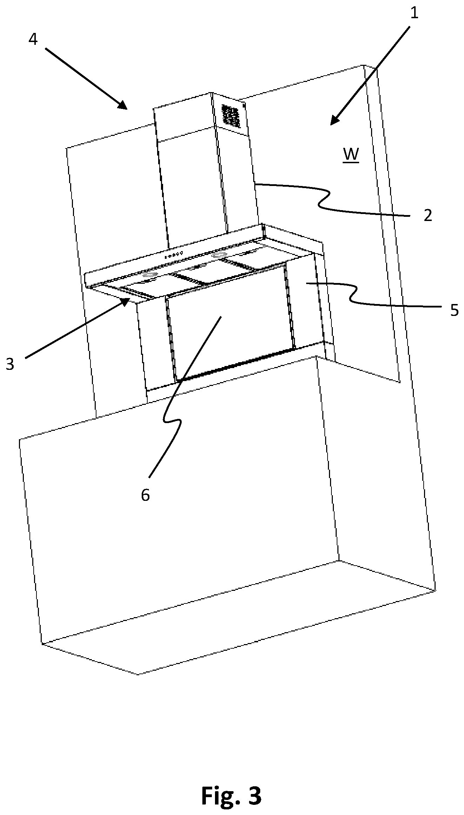

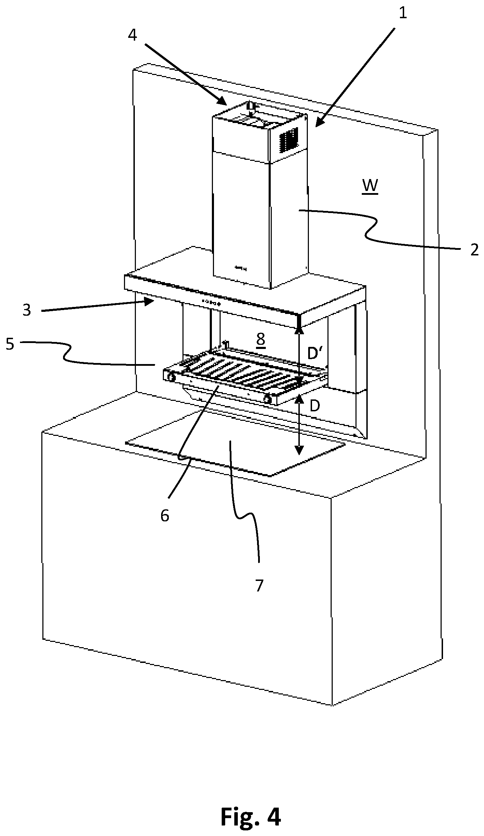

Figures 3 and 4 show a slightly modified form of the extractor hood 1 according to the invention, also referred to as a T-shaped hood. However, with regard to the box-shaped portion 5 and the cooking device 6, the design relates to the previously described design according to Figures 1 and 2. This also applies to the control unit 9 shown in Figure 2.

In both cases the cooking device 6 is in the unfolded first state at a clear free distance above the cooking hob 7, which free distance D is preferably between 10 and 30 cm, most preferably about 20 cm, while a free distance D' between inlet portion 3 and cooking device 6 is about 25 to 35 cm, preferably 30 cm, as already stated above.

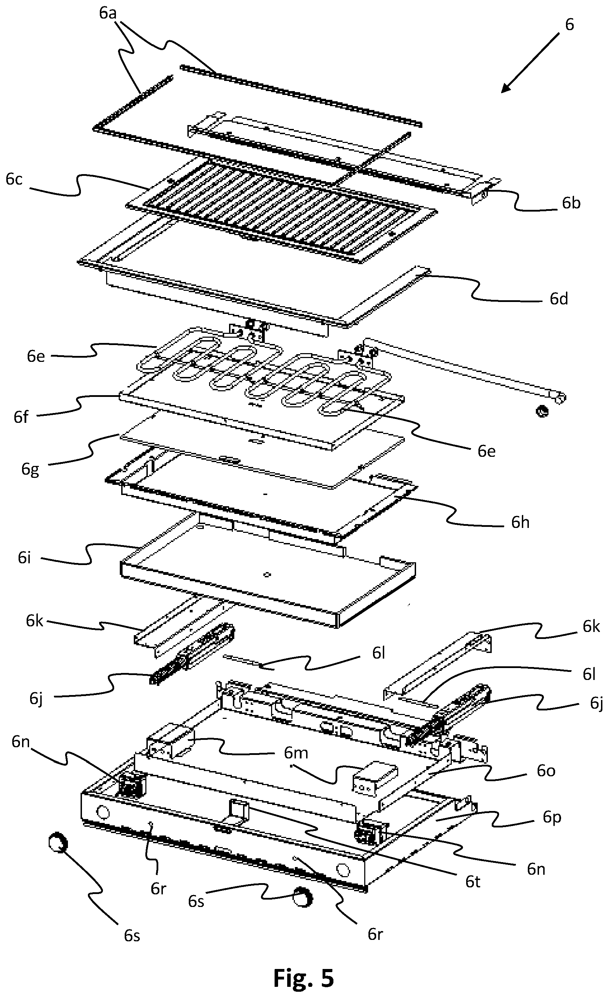

Figure 5 shows an exploded view of the exact construction of the cooking device 6. This comprises (from top to bottom in Figure 5) silicone gaskets 6a, a rear cover part 6b, the actual cooking plate 6c (preferably in the form of a cast iron grill), an outer frame 6d, two electric heating elements 6e (which can be activated either individually or together), a metallic insulating plate 6f (for heat reflection), an insulating plate 6g made of ceramic fibres, a further metallic insulating plate 6h (for heat reflection) and a further insulation 6i made of ceramic fibres, which is essentially of drawer-type and at least partially accommodates the components shown above in their assembled state.

Also shown below the insulation 6i are two hinges 6j for folding and unfolding the cooking device 6 with corresponding covers 6k made of metal, two capillary thermostats 6l with corresponding protective covers 6m, two temperature control units 6n (for cooperation with a respective one of the thermostats 6l), a component support bracket 6o and a drawer-shaped casing or receptacle 6p with front light indicators 6r for an activation state of the two heating elements 6e, respectively, and corresponding knobs 6s for setting a (cooking) temperature of the heating elements 6e. Reference numeral 6t indicates a grease drain element, which will be discussed in more detail below. The knobs 6s cooperate with the thermostats 6l and the temperature control units 6o, in a manner known per se, to set or maintain a desired temperature for the heating elements 6e.

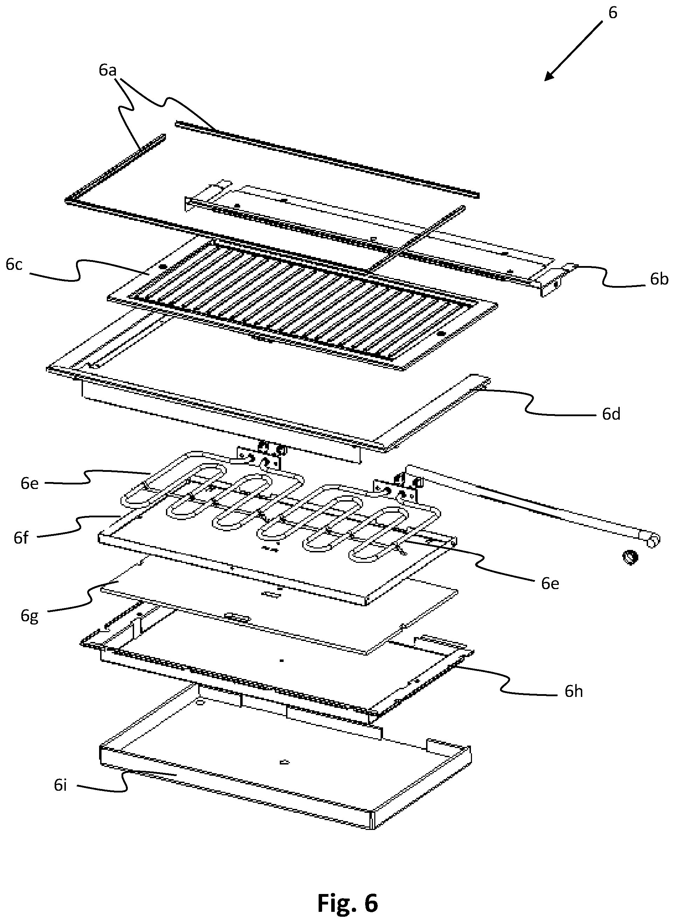

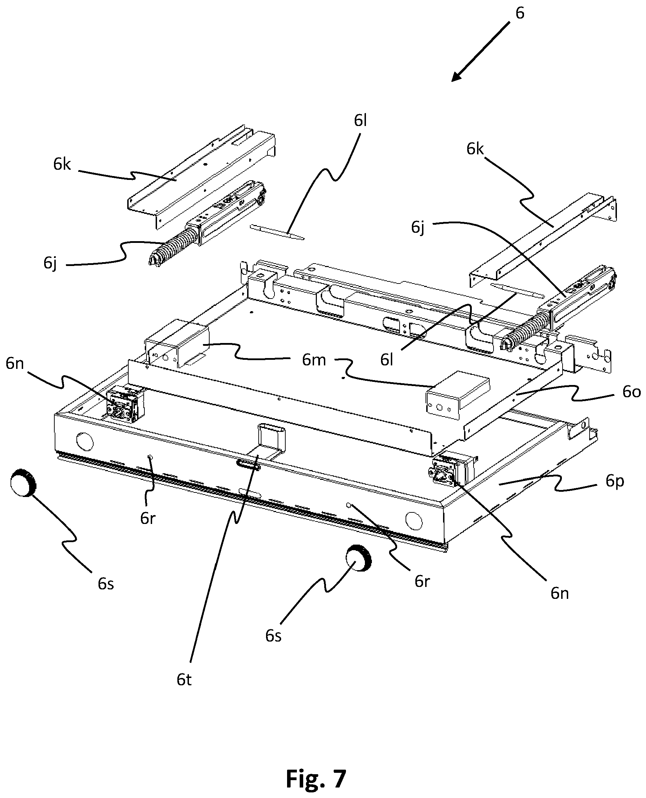

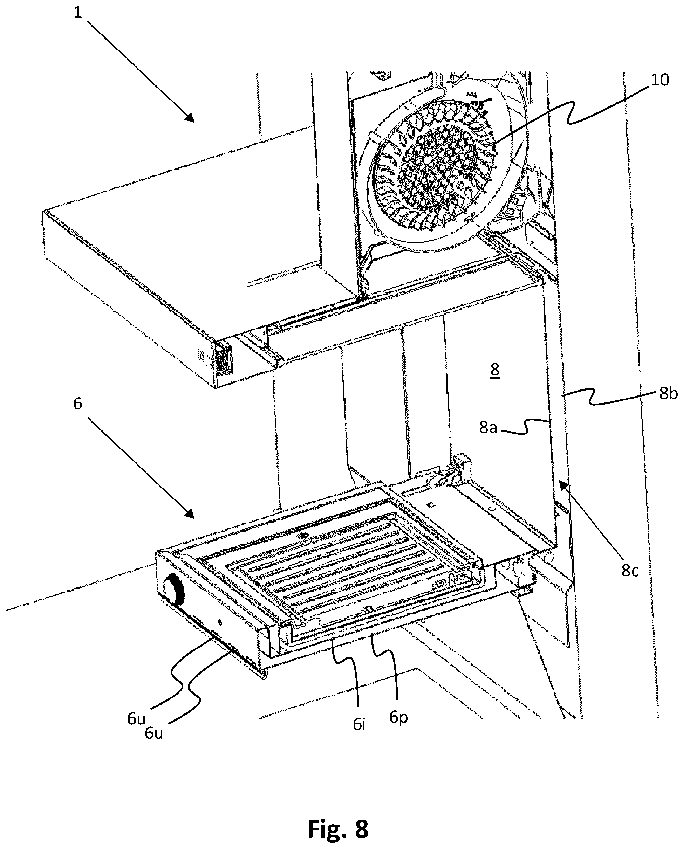

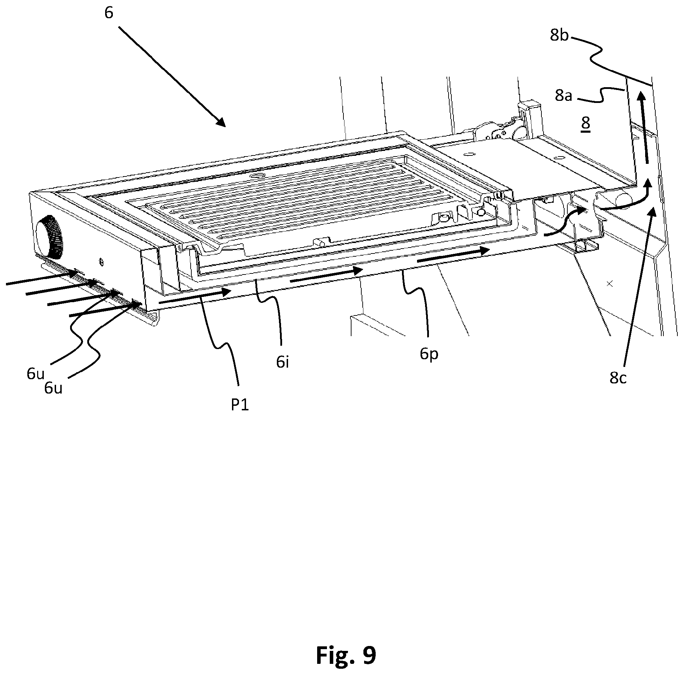

In Figures 6 and 7, the elements 6a to 6t of the cooking device 6 already described with reference to Figure 5 are shown again enlarged and separately. These elements 6a to 6t are joined together to form the cooking device 6, as can be seen in particular in figures 8 and 9.

In addition, figures 8 and 9 show a first possibility of providing ventilation and corresponding cooling for the cooking device 6. These two figures relate to an embodiment that is not part of the present invention.

Not all of the above-mentioned elements are explicitly denoted again in Figures 8 and 9.

As the sectional view in Figure 8 shows, the interior of the cooking device 6 is fluidly connected to the fan of the extractor hood 1 shown at reference numeral 10. For this purpose, the extractor hood 1 has a double rear wall 8a, 8b in the box-shaped region 5 or the receptacle 8 for the cooking device 6, so that an intermediate space 8c is formed via which the cooking device 6 is connected in a fluid-conducting manner to the fan 10. For this purpose, the cooking device 6 has apertures 6u at the front and at the sides in the area of the receptacle or casing 6p so that outside air can flow between the receptacle or casing 6p and the insulation 6i into the intermediate space 8c via suitable openings (not designated) in the rear components of the cooking device 6 when the fan 10 is active. This outside air can then be discharged together with other exhaust air by means of the fan 10.

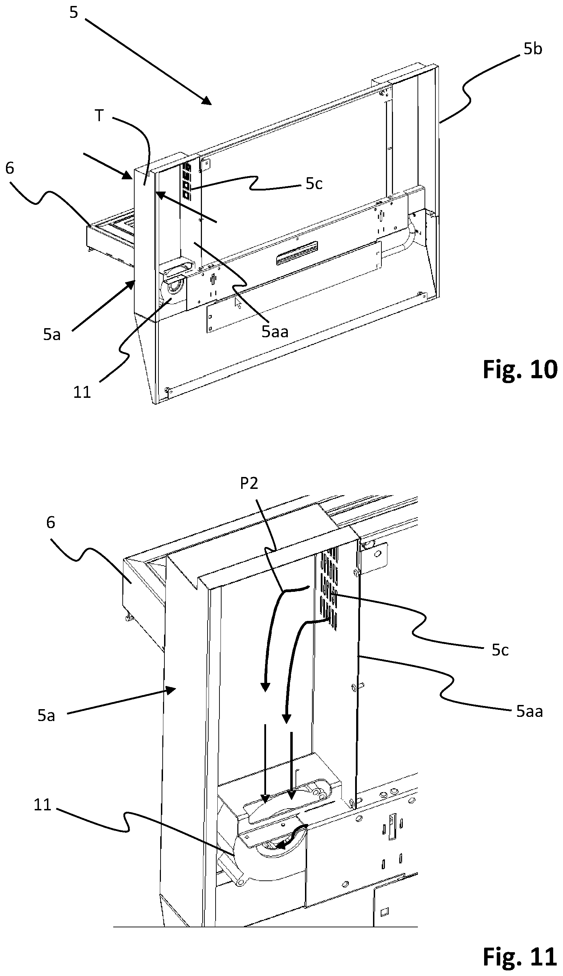

Figure 9 shows an example of the corresponding flow path (arrows P1). Figures 10 to 13 show a design of the extractor hood 1 according to the invention (of which only the lower box-shaped portion 5 and the cooking device 6 are shown here) for the purpose of cooling the cooking device 6.

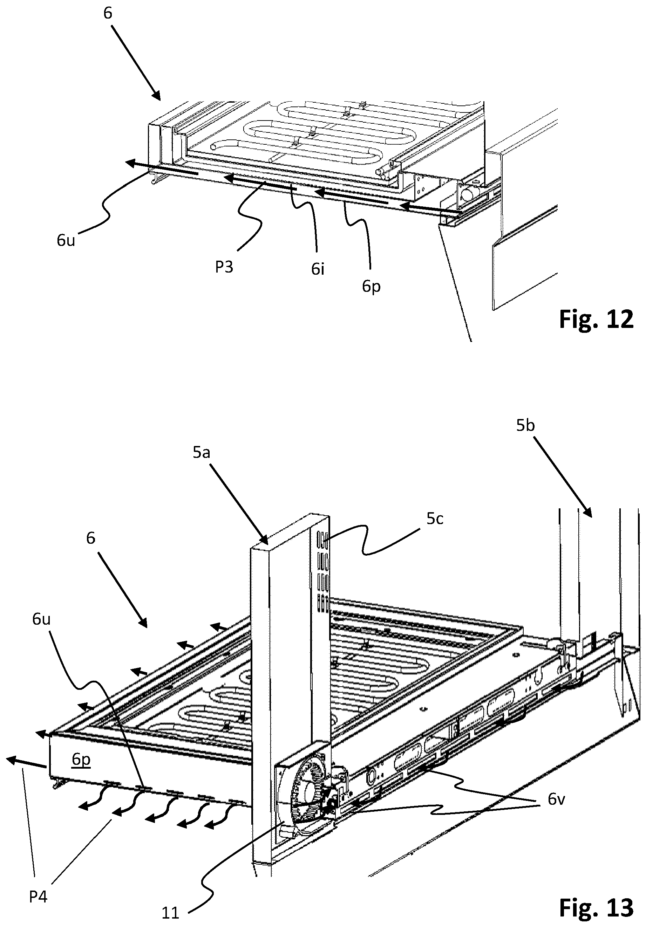

As can be seen from Figures 10 and 11, the lower box-shaped portion 5 has two lateral areas 5a, 5b of greater overall depth T than the recessed middle portion to the side of the receptacle 8, of which one portion 5a accommodates an additional fan 11, which additional fan 11 is arranged in a lower area approximately at the height of the unfolded cooking device 6. Furthermore, an inner boundary wall 5aa of the portion 5a has apertures or air intake openings 5c, via which apertures 5c the additional fan 11 is connected in a fluid-conducting manner to an outer area of the extractor hood 1. In this way, the additional fan 11 can draw in outside air through the portion 5a via the openings 5c, as shown in Figure 11 (arrows P2). As can be seen in particular from Figures 12 and 13, the fan 11 is in fluid communication with the aforementioned area between the receptacle 6p and the insulation 6i via suitable openings 6v in the rear area of the cooking device 6. In this way, the outside air drawn in by the additional fan 11 can flow through the cooking device 6 as shown by the arrows P3 in Figure 12 and then flow out again via the aforementioned openings or apertures 6u (arrows P4, Figure 13). In this way, the cooking device 6 can be cooled effectively.

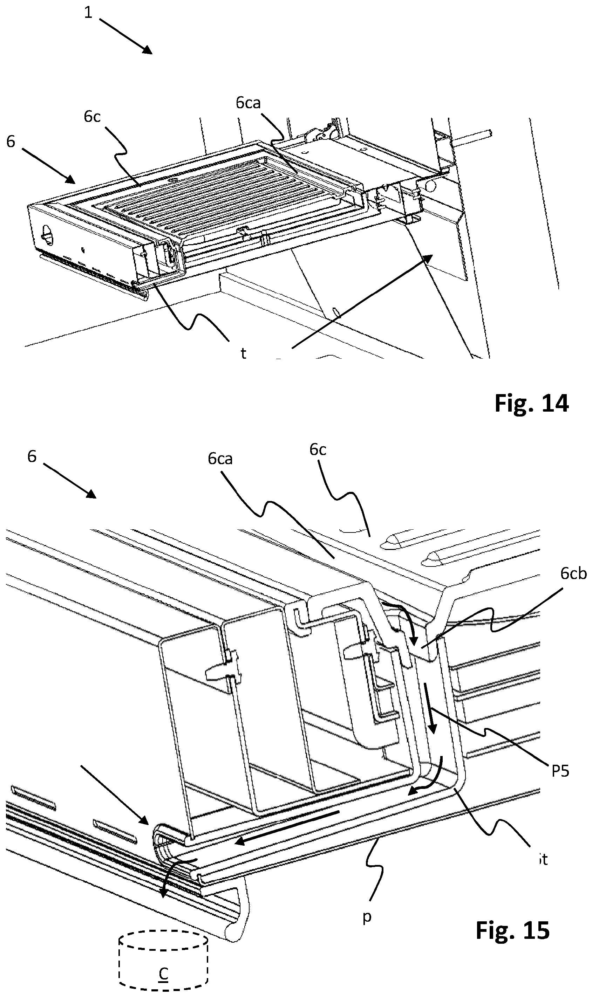

Figures 14 and 15 show another preferred detail of the extractor hood 1 according to the invention. As can be seen from the drawings, there is a circumferential channel 6ca for discharging cooking fat or grease, which channel 6ca surrounds the cooking plate 6c. Preferably, the channel 6ca is formed integrally with the cooking plate 6c in such a way that it is deeper in a front area of the cooking device 6, i.e., in an area facing away from the box-shaped portion 5, than in the rear area, so that cooking or frying fat naturally flows off toward the said front area of the cooking device 6 in the channel 6ca (for which purpose the channel 6ca can be slanted forward in the lateral areas, which cannot be seen in the drawings). At the front, the channel 6ca has a downward opening 6cb (cf. Figure 15), which opening 6cb cooperates with the aforementioned grease drainage element 6t referred to above. The grease drainage element 6t opens at the front of the cooking device 6 (at reference numeral 6ta) thus creating a fluid connection with an outside of the extractor hood, i.e., the cooking device 6, so that grease can flow out of the cooking device 6 according to the arrows P5. To collect the grease, a suitable container C can be placed in this area (shown schematically).

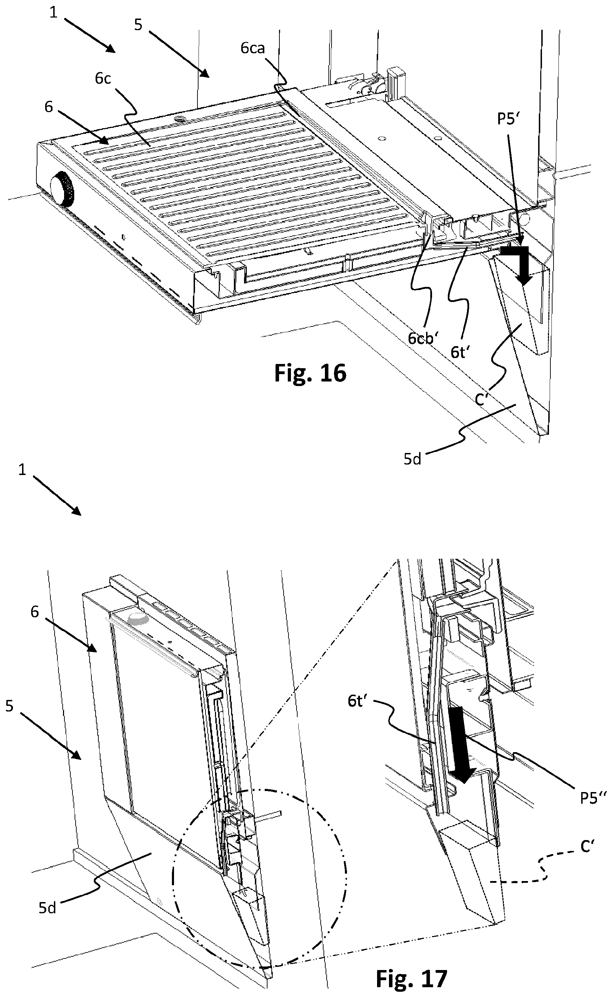

Figures 16 and 17 show another advantageous embodiment of the extractor hood 1 according to the invention. As can be seen from the drawings, there is again a circumferential channel 6ca for discharging cooking fat or grease, which channel 6ca surrounds the cooking plate 6c, as in Figures 14 and 15. Preferably, in contrast to the embodiment of Figures 14 and 15, the channel 6ca is formed integrally with the cooking plate 6c in such a way that it is deeper in a rear area of the cooking device 6, i.e., in an area facing toward the box-shaped portion 5, than in the front area, so that cooking or frying fat naturally flows off toward the said rear area of the cooking device 6 in the channel 6ca (for which purpose the channel 6ca can be slanted rearward in the lateral areas, which cannot be seen in the drawings). At the rear, the channel 6ca has a downward opening 6cb', which opening 6cb' cooperates with a grease drainage element 6t' in analogy to element 6t referred to above. The grease drainage element 6t' opens at the rear of the cooking device 6 thus creating a fluid connection so that grease can flow out of the cooking device 6 according to arrow P5'. To collect the grease, a suitable and preferably removeable container C' can be located (attached) inside a lower fixed part of body 2, i.e., of box-shaped portion 5 (shown schematically) behind a cover element 5d.

As shown in Figure 17, this particular system for the evacuation of the grease generated during the cooking can also prevent any grease from pouring into the rear area of the cooking device 6 when the latter is in its closed position.

As already explained before, in a back wall of the cooking device 6 fat collection is obtained by means of an opening that it connected to a pipe (said grease drainage element 6t') that puts it in fluid communication with said removable grease container C' located in the lower fixed cover of the box-shaped portion 5.

The grease evacuation path allows any grease to be discharged along arrow P5' and P5", respectively, both when the cooking device 6 is in its working position (horizontal, cf. Figure 16) and when it is in its closed position (vertical, cf. Figure 17).

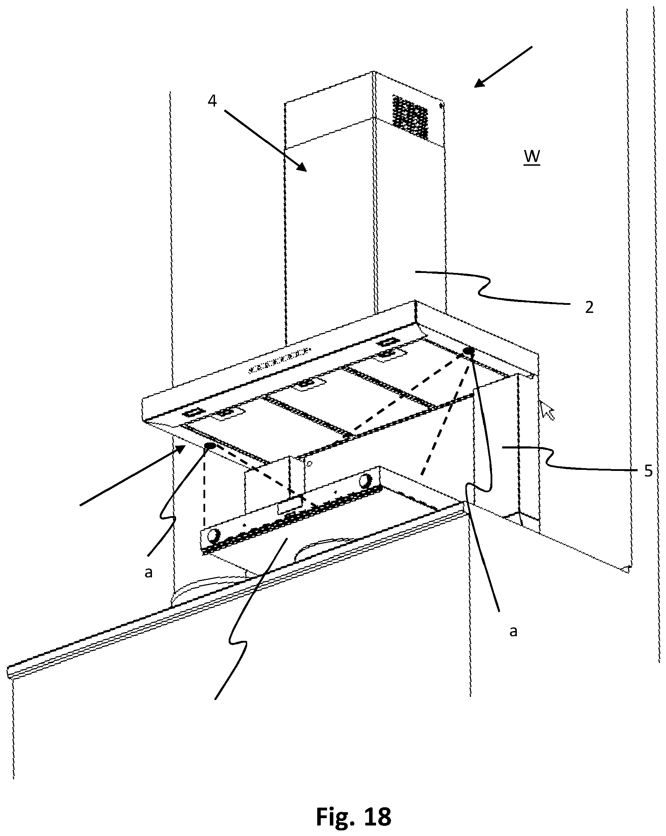

Figure 18 shows another embodiment of the extractor hood 1 according to the invention, similar to Figure 3. In this embodiment, the extractor hood 1 comprises two infrared temperature sensors 3a in an area of the inlet portion 3, as shown. There can be only one sensor 3a, and the sensor(s) 3a could be located in various places. The dashed triangular areas symbolize a detection region of a given sensor 3a.

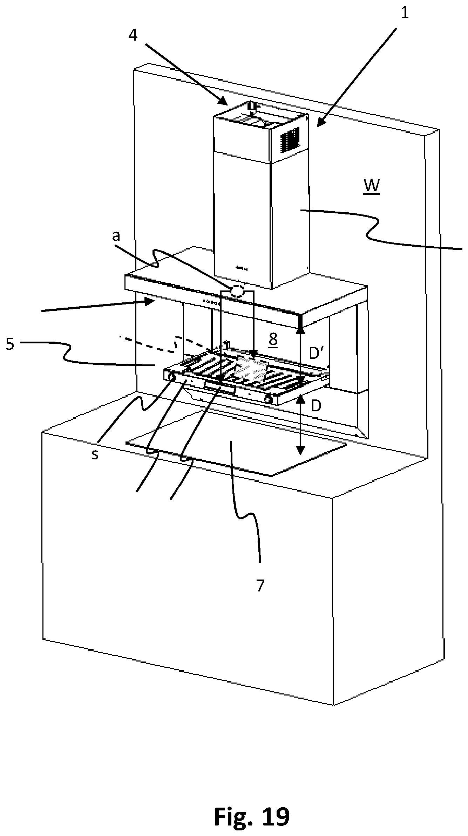

Figure 19 shows the extractor hood 1 of Figure 18 with cooking device 6 in its horizontal working position, cf. Figure 4. Cooking device 6, in the embodiment shown, comprises a temperature control unit 12 (which is equivalent to the two temperature control units 6n for cooperation with a respective one of the thermostats 6l, as explained above with reference to Figure 5) and a display 13, both of which cooperate with temperature sensor 3a. This allows controlling an actual cooking temperature of cooking device 6, which can be pre-set and/or altered via knobs 6s, by means of sensor 3a and control unit 12 and displaying said temperature via display 13.

It should be noted that the additional features explained in connection with Figures 18 and 19 can be used with any other embodiment of the present invention.

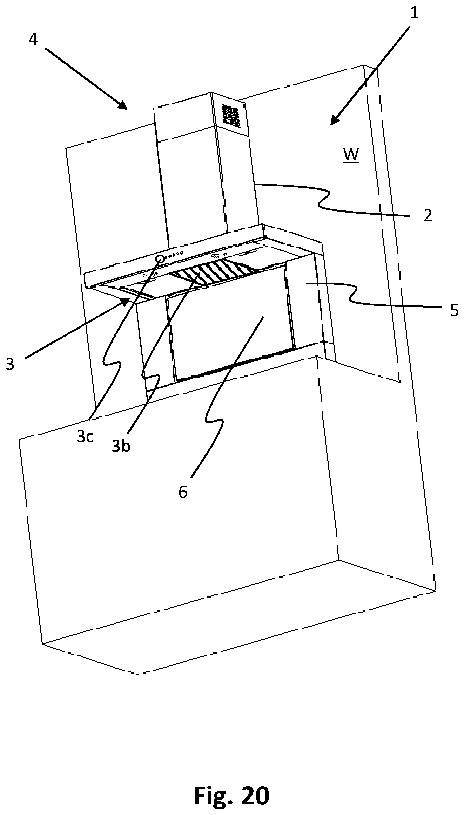

The same holds with respect to the embodiment of Figure 20.

Figure 20 shows the extractor hood 1 as previously explained with reference to Figure 3. In addition to said extractor hood 1, the embodiment of Figure 20 further comprises at least one additional heating element in the form of an infrared heating element under glass ceramic, as denoted by reference numeral 3b. Said additional heating element 3b is located in an area of said inlet portion 3 and allows simultaneous cooking from above as well as from below, if the cooking device 6 is folded out and activated. Furthermore, additional heating element 3b could be used separately from cooking device 6 for to keep prepared food at an elevated temperature prior to serving. Additional heating element 3b can be operated by knobs 6s (cf. Figure 7) or by means of a dedicated control element 3c, as shown in exemplary fashion.

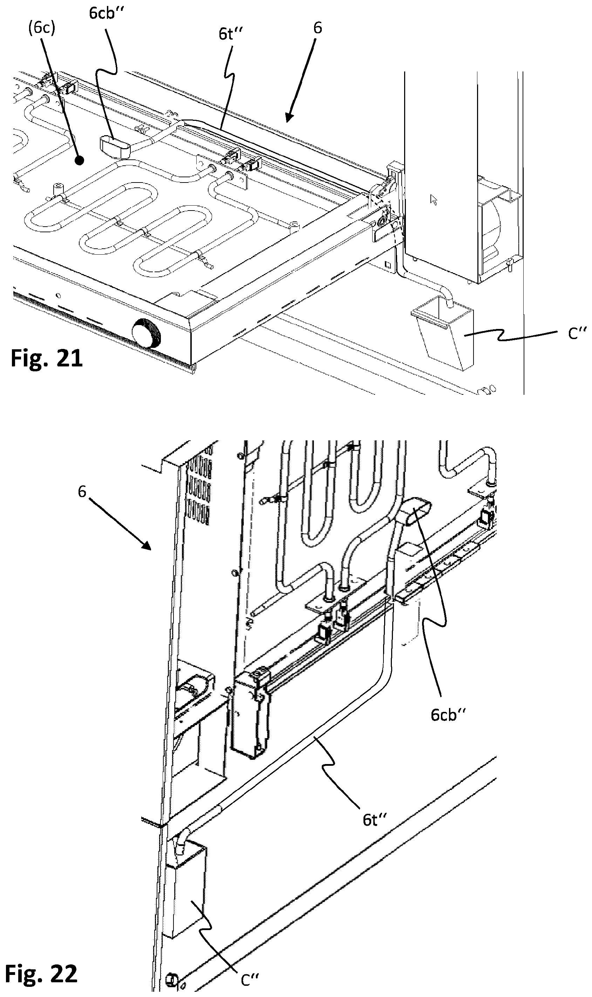

Figures 21 and 22 shown an alternative embodiment of the system for the evacuation of grease generated during the cooking (cf. Figures 16 and 17) to prevent it from pouring into the rear area of the hood when the cooking device 6 is closed.

In the cooking plate 6c (omitted for clarity, cf. Figure 16), fat collection is obtained by means of a central opening 6cb" connected to a pipe 6t" that puts it in communication with a removable grease container C" placed in the lower fixed cover (box-shaped portion 5) of the hood, which container C" is normally not visible as it is hidden behind a cover element (not shown, cf. Figure 16). The cooking plate 6c is preferably slanted towards said central opening 6cb".

The grease evacuation path is laid out in such a way that allows the grease to be discharged both when the cooking device 6 is in the working position (horizontal, Figure 21) and when it is in the closed position (vertical, Figure 22).

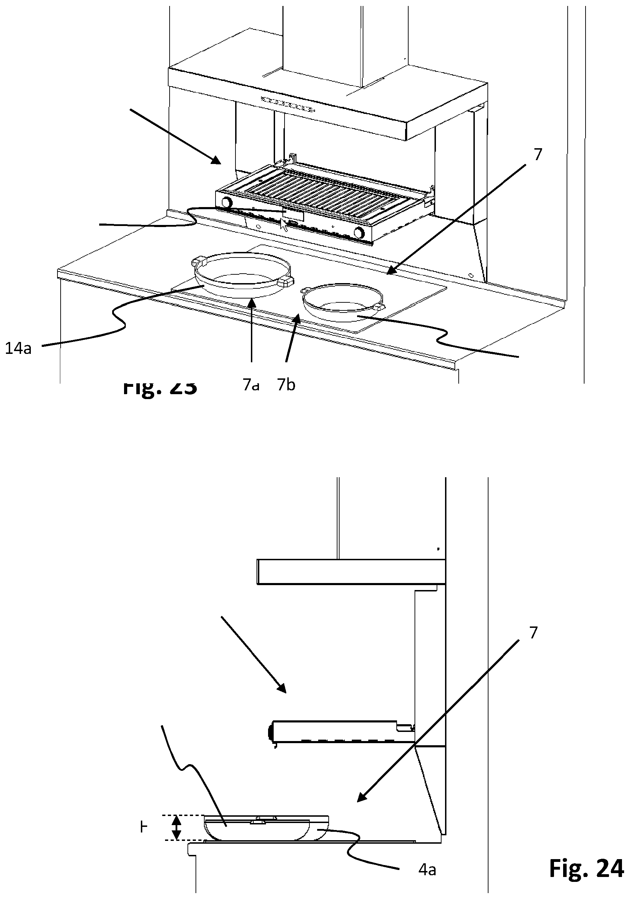

Figures 23 and 24 show the possible use of the cooking device 6 together with an additional cooking hob 7, as described before. As stated, it may be possible to use, e.g., two pans 14a, 14b with a limited height H of about 5 cm maximum on the two front hob heaters 7a, 7b.

It should be noted that the described design of the foldable cooking device 6 together with the cooling features and/or the grease evacuation can be realized regardless of its distance from the cooking hob 7 and/or from the inlet portion 3.

## Claims

1. A kitchen extractor hood (1) comprising:
a body (2) for positioning at a wall (W) of the kitchen, said body (2) having an inlet portion (3) and an outlet portion (4),
a fan (10) arranged in said body (2) for sucking in cooking fumes and vapours, in particular from a cooking hob (7) of the kitchen, above which cooking hob (7) the extractor hood (1) is to be positioned, via said inlet portion (3) and for pushing said fumes and vapours through the outlet portion (4) out of the extractor hood (1),
the body (2) of the extractor hood (1) has a box-shaped portion (5) extending beyond the inlet portion (3) and preferably along said wall (W ) of the kitchen, said box-shaped portion (5) supporting a retractable cooking device (6) having heating means (6e) capable of assuming a first position below said inlet portion (3) during use for the preparation of food by said heating means (6e), in which first position the cooking device (6) is folded out of said box-shaped portion (5), and a second position, in which second position said cooking device (6) is folded back into said box-shaped portion (5) when not in use,
said cooking device (6), when folded out, being placed at a distance (D') between 25 and 35 cm from the inlet portion (3), preferably at a distance (D') of about 30 cm;
said cooking device (6) comprising a casing (6p), in which casing (6p) at least said heating means (6e) are located,
**characterised in that**
said body (2) comprises at least one additional fan (11), which fan (11) is arranged to take in air from outside the extractor hood (1) and to push said air into said casing (6p),
said box-shaped portion (5) has a recess (8) for engaging with the cooking device (6) in said second position and at least one lateral portion (5a, 5b) delimiting said recess (8), said lateral portion (5a) holding said additional fan (11), and
said lateral portion (5a) has at least one air intake (5c) opening for supplying air to said additional fan (11) and is fluidically connected to an interior of said casing (6p).

2. The extractor hood (1) of claim 1, wherein
said cooking device (6) comprises a plancha, a hotstone and/or a barbecue grill, e.g., in the form of a cast iron cooking plate (6c).

3. The extractor hood (1) of claim 1 or 2, wherein
said casing (6p) comprises a thermal insulation and/or is made from a thermally insulating material, e.g., ceramic fibre.

4. The extractor hood (1) of any one of claims 1 through 3, wherein said casing (6p) has at least one air intake opening (6v) preferably in a portion below said heating means (6e).

5. The extractor hood (1) of any one of claims 1 through 4, wherein said air is pushed into said casing (6p) in an area below said heating means (6e).

6. The extractor hood (1) of any one of claims 1 through 5, wherein said casing (6p) has at least one air outlet opening (6u), preferably in a portion below said heating means (6e), more preferably on a front side facing away from said body (2) in said first position and/or on a lateral side thereof.

7. The extractor hood (1) of any one of claims 1 through 6 with reference to claim 2, wherein
a grease collecting channel (6ca) is arranged around said hotstone, plancha or barbecue grill (6c), said grease collecting channel (6ca) preferably being slanted, at least at the lateral sides of the cooking device (6),
a) toward a front side of the cooking device (6), said front side facing away from said body (2) in said first position, said grease collecting channel (6ca) more preferably further having at least one fluid connection (6t) with an outside of the extractor hood (1) for evacuation of grease; or
b) toward a back side of the cooking device (6), said back side facing toward said body (2) in said first position, said grease collecting channel (6ca) more preferably further having at least one fluid connection (6t') with a grease collecting recipient (C') arranged within a lower part of said body for collection of grease, said fluid connection (6t') being operational in both said first and second positions of the cooking device (6), wherein preferably said grease collecting recipient (C') is removeable from said body (2).

8. The extractor hood of claim 7, wherein said fluid connection (6t) is located at a front side of the cooking device (6) in said first position, preferably in a central position or at a corner.

9. The extractor hood of any one of claims 1 through 8, further comprising:
at least one temperature sensor (3a), preferably infrared temperature sensor, more preferably integrated in an area of said inlet portion (3), said temperature sensor (3a) in operative connection with said cooking device (6), in particular a temperature control unit (12) and/or a temperature display (13) of said cooking device (6) for controlling and/or displaying, respectively, a cooking temperature.

10. The extractor hood of any one of claims 1 through 9, further comprising:
at least one additional heating element, in particular infrared heating element under glass ceramic, in an area of said inlet portion (3), to allow a simultaneous cooking from above as well as from below.

11. A cooking system, comprising:
a kitchen extractor hood (1) according to any one of the preceding claims and an additional cooking hob (7),
wherein the extractor hood (1) is placed above said cooking hob (7) and wherein preferably the cooking device (6), in its first position, is located at a free distance from said cooking hob (7), said free distance measuring between 10 and 30 cm, preferably 20 cm.

12. The cooking system of claim 11, further comprising:
a control unit (9) devised to enable activation of the cooking device (6) in said first position only and to allow activation of the cooking device (6) and said additional cooking hob (7) separately only, wherein preferably the control unit (9) allows activation of the cooking device (6) only in combination with activation of the extractor hood (1), i.e., said fan (10) and/or in combination with said additional fan (11).

## Patentansprüche

1. Küchen-Dunstabzugshaube (1), umfassend:
einen Körper (2) zur Positionierung an einer Wand (W) der Küche, wobei der Körper (2) einen Einlassabschnitt (3) und einen Auslassabschnitt (4) aufweist,
ein in dem Körper (2) angeordnetes Gebläse (10) zum Ansaugen von Kochdämpfen und -dünsten, insbesondere von einem Kochfeld (7) der Küche, über welchem Kochfeld (7) die Dunstabzugshaube (1) positioniert werden soll, über den Einlassabschnitt (3) und zum Ausstoßen der Dämpfe und Dünste durch den Auslassabschnitt (4) aus der Dunstabzugshaube (1),
wobei der Körper (2) der Dunstabzugshaube (1) einen kastenförmigen Abschnitt (5) aufweist, der sich über den Einlassabschnitt (3) hinaus und bevorzugt entlang der Wand (W) der Küche erstreckt, wobei der kastenförmige Abschnitt (5) eine ausziehbare Kochvorrichtung (6), die Heizmittel (6e) aufweist, trägt, die in der Lage ist, während einer Verwendung zur Zubereitung von Speisen durch die Heizmittel (6e) eine erste Position unterhalb des Einlassabschnitts (3), in welcher ersten Position die Kochvorrichtung (6) aus dem kastenförmigen Abschnitt (5) herausgeklappt ist, und eine zweite Position, in welcher zweiten Position die Kochvorrichtung (6), wenn sie nicht in Gebrauch ist, wieder in den kastenförmigen Abschnitt (5) eingeklappt ist, einzunehmen,
wobei die Kochvorrichtung (6), wenn sie herausgeklappt ist, in einem Abstand (D') zwischen 25 und 35 cm vom Einlassabschnitt (3), bevorzugt in einem Abstand (D') von etwa 30 cm, platziert ist;
wobei die Kochvorrichtung (6) ein Gehäuse (6p) umfasst, wobei sich in dem Gehäuse (6p) mindestens die Heizmittel (6e) befinden,
**dadurch gekennzeichnet, dass**
der Körper (2) mindestens ein zusätzliches Gebläse (11) umfasst, wobei das Gebläse (11) dafür angeordnet ist, Luft von außerhalb der Dunstabzugshaube (1) anzusaugen und die Luft in das Gehäuse (6p) zu drücken,
der kastenförmige Abschnitt (5) eine Aussparung (8) zum Einrücken mit der Kochvorrichtung (6) in der zweiten Position und mindestens einen seitlichen Abschnitt (5a, 5b), der die Aussparung (8) begrenzt, aufweist, wobei der seitliche Abschnitt (5a) das zusätzliche Gebläse (11) hält, und
der seitliche Abschnitt (5a) mindestens eine Lufteinlass- (5c) Öffnung zum Zuführen von Luft zu dem zusätzlichen Gebläse (11) aufweist und fluidisch mit dem Inneren des Gehäuses (6p) verbunden ist.

2. Dunstabzugshaube (1) nach Anspruch 1, wobei
die Kochvorrichtung (6) eine Grillplatte, einen heißen Stein und/oder ein Grillrost, z. B. in der Form einer gusseisernen Kochplatte (6c), umfasst.

3. Dunstabzugshaube (1) nach Anspruch 1 oder 2, wobei
das Gehäuse (6p) eine Wärmedämmung umfasst und/oder aus einem wärmeisolierenden Material, z. B. Keramikfaser, hergestellt ist.

4. Dunstabzugshaube (1) nach einem der Ansprüche 1 bis 3, wobei
das Gehäuse (6p) mindestens eine Lufteinlassöffnung (6v), bevorzugt in einem Bereich unterhalb der Heizmittel (6e), aufweist.

5. Dunstabzugshaube (1) nach einem der Ansprüche 1 bis 4, wobei
die Luft in einem Bereich unterhalb der Heizmittel (6e) in das Gehäuse (6p) gedrückt wird.

6. Dunstabzugshaube (1) nach einem der Ansprüche 1 bis 5, wobei
das Gehäuse (6p) mindestens eine Luftauslassöffnung (6u), bevorzugt in einem Bereich unterhalb der Heizmittel (6e), bevorzugter auf einer Vorderseite, die von dem Körper (2) in der ersten Position abgewandt ist, und/oder auf einer seitlichen Seite davon, aufweist.

7. Dunstabzugshaube (1) nach einem der Ansprüche 1 bis 6 mit Bezugnahme auf Anspruch 2, wobei
eine Fettauffangrinne (6ca) um den heißen Stein, die Grillplatte oder den Grillrost (6c) angeordnet ist, wobei die Fettauffangrinne (6ca) bevorzugt, mindestens an den Seiten der Kochvorrichtung (6), abgeschrägt ist,
a) in Richtung einer Vorderseite der Kochvorrichtung (6), wobei die Vorderseite in der ersten Position vom Körper (2) abgewandt ist, die Fettauffangrinne (6ca) bevorzugter weiter mindestens eine Flüssigkeitsverbindung (6t) mit einer Außenseite der Dunstabzugshaube (1) zur Fettabfuhr aufweist; oder
b) in Richtung einer Rückseite der Kochvorrichtung (6), wobei die Rückseite in der ersten Position dem Körper (2) zugewandt ist, die Fettauffangrinne (6ca) bevorzugter weiter mindestens eine Flüssigkeitsverbindung (6t') mit einem Fettauffangbehälter (C') aufweist, der innerhalb eines unteren Teils des Körpers zum Auffangen von Fett angeordnet ist, wobei die Flüssigkeitsverbindung (6t') sowohl in der ersten als auch in der zweiten Position der Kochvorrichtung (6) funktionsfähig ist, wobei der Fettauffangbehälter (C') bevorzugt vom Körper (2) abnehmbar ist.

8. Dunstabzugshaube nach Anspruch 7, wobei
sich der Flüssigkeitsanschluss (6t) an einer Vorderseite der Kochvorrichtung (6) in der ersten Position, bevorzugt in der Mitte oder an einer Ecke, befindet.

9. Dunstabzugshaube nach einem der Ansprüche 1 bis 8, weiter umfassend:
mindestens einen Temperatursensor (3a), bevorzugt einen Infrarot-Temperatursensor, der bevorzugter in einem Bereich des Einlassabschnitts (3) integriert ist, wobei der Temperatursensor (3a) in Arbeitsverbindung mit der Kochvorrichtung (6), insbesondere einer Temperaturregelungseinheit (12) und/oder einer Temperaturanzeige (13) der Kochvorrichtung (6) zum jeweiligen Steuern und/oder Anzeigen einer Kochtemperatur, steht.

10. Dunstabzugshaube nach einem der Ansprüche 1 bis 9, weiter umfassend:
mindestens ein zusätzliches Heizelement, insbesondere ein Infrarot-Heizelement unter Glaskeramik, in einem Bereich des Einlassabschnitts (3), um ein gleichzeitiges Garen von oben sowie von unten zu ermöglichen.

11. Kochsystem, umfassend:
eine Küchen-Dunstabzugshaube (1) nach einem der vorstehenden Ansprüche und ein zusätzliches Kochfeld (7),
wobei die Dunstabzugshaube (1) über dem Kochfeld (7) angeordnet ist und wobei sich die Kochvorrichtung (6), in ihrer ersten Position, bevorzugt in einem freien Abstand von dem Kochfeld (7) befindet, der zwischen 10 und 30 cm, bevorzugt 20 cm, beträgt.

12. Kochsystem nach Anspruch 11, weiter umfassend:
eine Steuereinheit (9), die so ausgelegt ist, dass sie eine Aktivierung der Kochvorrichtung (6) nur in der ersten Position zulässt und eine Aktivierung der Kochvorrichtung (6) und des zusätzlichen Kochfeldes (7) nur gesondert zulässt, wobei die Steuereinheit (9) bevorzugt eine Aktivierung der Kochvorrichtung (6) nur in Kombination mit einer Aktivierung der Dunstabzugshaube (1), d. h. des Gebläses (10), und/oder in Kombination mit dem zusätzlichen Gebläse (11) zulässt.

## Revendications

1. Hotte d'extraction de cuisine (1) comprenant :
un corps (2) destiné à être positionné contre une paroi (W) de la cuisine, ledit corps (2) présentant une portion d'entrée (3) et une portion de sortie (4),
un ventilateur (10) agencé dans ledit corps (2) pour aspirer des fumées et vapeurs de cuisson, en particulier d'une plaque de cuisson (7) de la cuisine, au-dessus de laquelle plaque de cuisson (7) la hotte d'extraction (1) doit être positionnée, par l'intermédiaire de ladite portion d'entrée (3) et pour pousser lesdites fumées et vapeurs à travers la portion de sortie (4) hors de la hotte d'extraction (1),
le corps (2) de la hotte d'extraction (1) présente une portion en forme de boîte (5) s'étendant au-delà de la portion d'entrée (3) et de préférence le long de la paroi (W) de la cuisine, ladite portion en forme de boîte (5) supportant un dispositif de cuisson rétractable (6) présentant des moyens de chauffage (6e) capable de prendre une première position sous ladite portion d'entrée (3) pendant l'utilisation pour la préparation de nourriture par lesdits moyens de chauffage (6e), dans laquelle première position le dispositif de cuisson (6) est déplié hors de ladite portion en forme de boîte (5), et une seconde position, dans laquelle seconde position ledit dispositif de cuisson (6) est replié dans ladite portion en forme de boîte (5) hors de l'utilisation,
ledit dispositif de cuisson (6), lorsqu'il est déplié, étant placé à une distance (D') entre 25 et 35 cm de la portion d'entrée (3), de préférence à une distance (D') d'environ 30 cm ;
ledit dispositif de cuisson (6) comprenant un boîtier (6p), dans lequel boîtier (6p) au moins lesdits moyens de chauffage (6e) sont situés,
**caractérisée en ce que**
ledit corps (2) comprend au moins un ventilateur supplémentaire (11), lequel ventilateur (11) est agencé pour aspirer de l'air de l'extérieur de la hotte d'extraction (1) et pour pousser ledit air dans ledit boîtier (6p),
ladite portion en forme de boîte (5) présente un évidement (8) destiné à s'engager avec le dispositif de cuisson (6) dans ladite seconde position et au moins une portion latérale (5a, 5b) délimitant ledit évidement (8), ladite portion latérale (5a) supportant ledit ventilateur supplémentaire (11), et
ladite portion latérale (5a) présente au moins une ouverture de prise d'air (5c) pour alimenter en air ledit ventilateur supplémentaire (11) et est connectée fluidiquement à un intérieur dudit boîtier (6p).

2. Hotte d'extraction (1) selon la revendication 1, dans laquelle
ledit dispositif de cuisson (6) comprend une plancha, une pierre chaude et/ou une grille de barbecue, par ex. sous la forme d'une plaque de cuisson en fonte (6c).

3. Hotte d'extraction (1) selon la revendication 1 ou 2, dans laquelle
ledit boîtier (6p) comprend une isolation thermique et/ou est fabriqué à partir d'un matériau thermiquement isolant, par ex. de la fibre céramique.

4. Hotte d'extraction (1) selon l'une quelconque des revendications 1 à 3, dans laquelle
ledit boîtier (6p) présente au moins une ouverture de prise d'air (6v) de préférence dans une portion sous lesdits moyens de chauffage (6e).

5. Hotte d'extraction (1) selon l'une quelconque des revendications 1 à 4, dans laquelle
ledit air est poussé dans ledit boîtier (6p) dans une zone sous lesdits moyens de chauffage (6e).

6. Hotte d'extraction (1) selon l'une quelconque des revendications 1 à 5, dans laquelle
ledit boîtier (6p) présente au moins une ouverture de sortie d'air (6u), de préférence dans une portion sous lesdits moyens de chauffage (6e), plus préférentiellement sur un côté avant faisant face à l'écart dudit corps (2) dans ladite première position et/ou sur un côté latéral de celui-ci.

7. Hotte d'extraction (1) selon l'une quelconque des revendications 1 à 6, en référence à la revendication 2, dans laquelle
un canal de collecte de graisse (6ca) est agencé autour de ladite pierre chaude, plancha ou grille de barbecue (6c), ledit canal de collecte de graisse (6ca) étant de préférence incliné, au moins sur les côtés latéraux du dispositif de cuisson (6),
a) vers un côté avant du dispositif de cuisson (6), ledit côté avant faisant face à l'écart dudit corps (2) dans ladite première position, ledit canal de collecte de graisse (6ca) présentant en outre plus préférentiellement au moins une connexion fluidique (6t) avec un extérieur de la hotte d'extraction (1) pour l'évacuation de graisse ; ou
b) vers un côté arrière du dispositif de cuisson (6), ledit côté arrière faisant face vers ledit corps (2) dans ladite première position, ledit canal de collecte de graisse (6ca) présentant en outre plus préférentiellement au moins une connexion fluidique (6t') avec un récipient de collecte de graisse (C') agencé au sein d'une partie inférieure dudit corps pour la collecte de graisse, ladite connexion fluidique (6t') étant fonctionnelle à la fois dans lesdites première et seconde positions du dispositif de cuisson (6), dans laquelle de préférence ledit récipient de collecte de graisse (C') est amovible dudit corps (2).

8. Hotte d'extraction selon la revendication 7, dans laquelle ladite connexion fluidique (6t) est située sur le côté avant du dispositif de cuisson (6) dans ladite première position, de préférence dans une position centrale ou au niveau d'un coin.

9. Hotte d'extraction selon l'une quelconque des revendications 1 à 8, comprenant en outre :
au moins un capteur de température (3a), de préférence un capteur de température infrarouge, plus préférentiellement intégré dans une zone de ladite portion d'entrée (3), ledit capteur de température (3a) en connexion fonctionnelle avec ledit dispositif de cuisson (6), en particulier une unité de commande de température (12) et/ou un affichage de température (13) dudit dispositif de cuisson (6) pour la commande et/ou l'affichage, respectivement, d'une température de cuisson.

10. Hotte d'extraction selon l'une quelconque des revendications 1 à 9, comprenant en outre :
au moins un élément chauffant supplémentaire, en particulier un élément chauffant infrarouge sous vitrocéramique, dans une zone de ladite portion d'entrée (3), pour permettre une cuisson simultanée par le haut ainsi que par le bas.

11. Système de cuisson, comprenant :
une hotte d'extraction de cuisine (1) selon l'une quelconque des revendications précédentes et une plaque de cuisson supplémentaire (7),
dans lequel la hotte d'extraction (1) est placée au-dessus de ladite plaque de cuisson (7) et dans lequel de préférence le dispositif de cuisson (6), dans sa première position, est situé à une distance libre de ladite plaque de cuisson (7), ladite distance libre mesurant entre 10 et 30 cm, de préférence 20 cm.

12. Système de cuisson selon la revendication 11, comprenant en outre :
une unité de commande (9) conçue pour permettre l'activation du dispositif de cuisson (6) dans ladite première position uniquement et pour permettre l'activation du dispositif de cuisson (6) et de ladite plaque de cuisson supplémentaire (7) séparément uniquement, dans lequel de préférence l'unité de commande (9) permet l'activation du dispositif de cuisson (6) uniquement en combinaison avec l'activation de la hotte d'extraction (1), c'est-à-dire ledit ventilateur (10) et/ou en combinaison avec ledit ventilateur supplémentaire (11).
